(19) Europäisches Patentamt
European Patent Office
Office européen des brevets

(11) **EP 2 795 760 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(21) Anmeldenummer: **12769339.8**

(22) Anmeldetag: **04.09.2012**

(51) Int Cl.:
*H02J 7/00* (2006.01)   *H02J 7/34* (2006.01)

(86) Internationale Anmeldenummer:
**PCT/EP2012/067205**

(87) Internationale Veröffentlichungsnummer:
**WO 2013/037671 (21.03.2013 Gazette 2013/12)**

(54) **LADESCHALTUNG FÜR EINE KAPAZITÄT UND VERFAHREN ZUM AUFLADEN EINER KAPAZITÄT**

CHARGING CIRCUIT FOR A CAPACITANCE AND METHOD FOR CHARGING A CAPACITANCE

CIRCUIT DE CHARGE POUR CONDENSATEUR ET PROCÉDÉ DE CHARGE D'UN CONDENSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2011 DE 102011113641**

(43) Veröffentlichungstag der Anmeldung:
**29.10.2014 Patentblatt 2014/44**

(73) Patentinhaber: **AMS AG**
**8141 Unterpremstätten (AT)**

(72) Erfinder: **TEUFEL, Mario**
**A-8112 Gratwein (AT)**

(74) Vertreter: **Epping - Hermann - Fischer Patentanwaltsgesellschaft mbH Schloßschmidstraße 5 80639 München (DE)**

(56) Entgegenhaltungen:
EP-A2- 1 696 532      US-A- 5 592 070
US-A1- 2008 212 249      US-A1- 2009 237 142
US-B1- 6 215 634

• Pierre Mars ET AL: "Superkondensatoren verbessern Blitzlicht-LEDs - elektroniknet.de", , 23 May 2007 (2007-05-23), XP055209366, Retrieved from the Internet: URL:http://www.elektroniknet.de/e-mechanik -passive/passive/artikel/365/1/ [retrieved on 2015-08-25]

**Beschreibung**

Die Erfindung betrifft eine Ladeschaltung für eine Kapazität und ein Verfahren zum Aufladen der Kapazität.

In vielen Anwendungen werden Kapazitäten als Ladungsspeicher verwendet. Ein Beispiel hierfür ist der Betrieb eines Blitzlichts. Die in der Kapazität zwischengespeicherte Ladung wird im Moment des Auslösens des Blitzes beispielsweise einer Blitzlichtleuchtdiode zur Verfügung gestellt. Um dies zu ermöglichen, muss der Ladungsspeicher zuerst auf die benötigte Spannung aufgeladen werden. Zum Aufladen einer derartigen Kapazität sind unterschiedliche Methoden bekannt. Eine Möglichkeit besteht darin, die Kapazität mit Hilfe eines zu dieser in Reihe geschalteten Widerstands, welcher einen der Kapazität zugeführten Ladestrom begrenzt, aufzuladen. Eine weitere Möglichkeit besteht darin, die Kapazität direkt über eine Stromquelle mit einem definierten Strom aufzuladen. Beide Möglichkeiten ziehen unter Berücksichtigung thermischer Gegebenheiten eine relativ lange Aufladezeit nach sich.

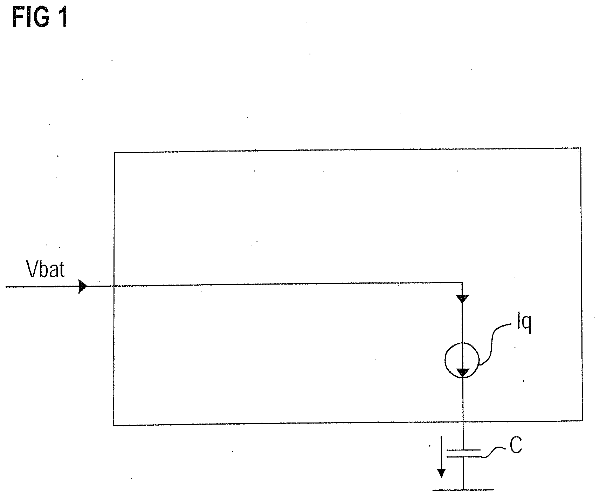

Eine bekannte Möglichkeit einer Ladeschaltung für eine Kapazität ist in Figur 1 gezeigt. Hier erfolgt das Aufladen mit Hilfe einer Stromquelle Iq, welche von einer Spannungsquelle versorgt wird und der Kapazität C einen Ladestrom in bestimmter Höhe bereitstellt. In einem Beispiel, bei dem die Stromquelle Iq einen Strom von 1 A liefert, bei dem der Wert der Kapazität 512 mF beträgt und von der Spannungsquelle eine Spannung von 4,4 V bereitgestellt wird, ergibt sich über den Zusammenhang

$$t = C \cdot \frac{U}{I}$$

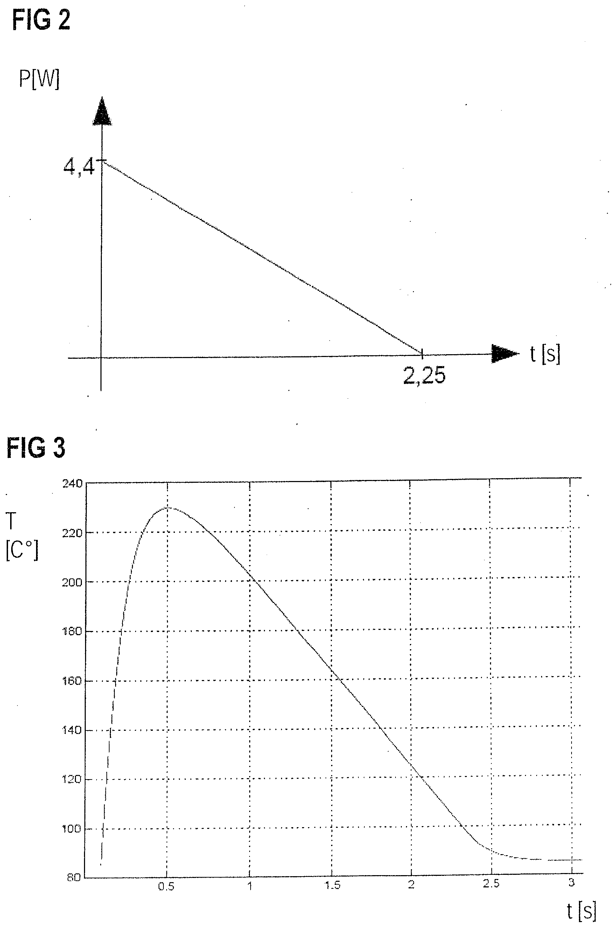

wobei I der Wert des Ladestroms, C der Wert der Kapazität und U der Wert der Spannung ist, als Ladezeit t ein Wert von 2,25 s. Es dauert also 2,25 s, um die Kapazität C von 0 V auf den Wert der Batteriespannung Vbat, nämlich 4,4 V, aufzuladen. In Figur 2 ist der dazugehörige zeitliche Verlauf der Verlustleistung P dargestellt. Die generierte Verlustleistung beträgt anfangs 4,4 W und hat nach 2,25 s den Wert 0 W erreicht. Figur 3 zeigt den zugehörigen Verlauf der Temperatur T der zum Aufladen benutzten Schaltung in °C im Verhältnis zur Zeit t. Aus Figur 3 ist zu erkennen, dass die Temperatur einen Maximalwert von 230 °C erreicht, welche deutlich oberhalb des thermischen Limits von Siliziumchips liegt. Erfahrungsgemäß haben Siliziumchips ein thermisches Limit, welches bei zirka 180 °C liegt. Die beschriebene Möglichkeit, den Ladungsspeicher zu laden, würde also den Chip thermisch zerstören.

In Dokument CN 2643528 Y ist eine Ladeschaltung für eine Kapazität, welche ein Blitzlicht betreibt, beschrieben. Mit der gezeigten Schaltung wird die Kapazität über einen Schalter im Kurzschlussbetrieb aufgeladen.

Das Dokument US 2009/0237142 A1 zeigt eine Ladesteuerungsschaltung für eine Batterie.

Eine Aufgabe besteht folglich darin, eine Schaltung und ein Verfahren anzugeben, mit der beziehungsweise mit dem das Laden einer Kapazität beschleunigt wird, ohne thermische Grenzen zu überschreiten.

Die Aufgabe wird gelöst mit den Gegenständen der unabhängigen Patentansprüche. Weiterbildungen und Ausgestaltungen sind jeweils Gegenstände der abhängigen Ansprüche.

In einer Ausführungsform weist eine Ladeschaltung für eine Kapazität einen ersten Anschluss zum Zuführen einer Versorgungsspannung, einen zweiten Anschluss, eine Kapazität, die mit dem zweiten Anschluss und einem Bezugspotentialanschluss verbunden ist, einen Ladeschalter, der mit dem ersten und mit dem zweiten Anschluss gekoppelt ist und eine Temperatureinheit auf. Die Temperatureinheit umfasst einen Ausgang, der mit einem Steuereingang des Ladeschalters direkt gekoppelt ist. Die Temperatureinheit ist zur Steuerung des Ladeschalters in Abhängigkeit einer Differenz zwischen einer momentanen Temperatur der Ladeschaltung und einer einstellbaren oberen Grenzwerttemperatur der Ladeschaltung eingerichtet. Die Kapazität ist zum Betrieb eines Blitzlichts eingerichtet. Die Temperatureinheit weist einen Komparator mit Hysterese auf. Der Komparator umfasst eine erste Schaltschwelle in Abhängigkeit der oberen Grenzwerttemperatur und eine zweite Schaltschwelle in Abhängigkeit einer unteren Grenzwerttemperatur. Der Komparator weist einen ersten Eingang, einen weiteren Eingang und einen Ausgang auf. Dem ersten Eingang ist ein Istwertsignal in Abhängigkeit der momentanen Temperatur zugeführt. Dem weiteren Eingang ist ein oberes Grenzwertsignal in Abhängigkeit der oberen Grenzwerttemperatur zugeführt. Am Ausgang ist ein Steuersignal als Funktion der Differenz zwischen Istwertsignal und oberem Grenzwertsignal bereitgestellt. Der Ausgang des Komparators bildet dabei den Ausgang der Temperatureinheit.

Zu Beginn des Ladevorgangs wird der Ladeschalter geschlossen, sodass die Versorgungsspannung über den Ladeschalter der Ka pazität zugeführt wird. Die zugeführte Leistung, die sich aus Versorgungsspannung und einem über einem Innenwiderstand des Ladeschalters oder einem Serienwiderstand des Ladeschalters entstehenden Ladestrom ergibt, führt zu einer Erhöhung der momentanen Temperatur der Ladeschaltung. Die Temperatureinheit steuert den Ladeschalter derart, dass die einstellbare obere Grenzwerttemperatur während des Ladevorgangs nicht überschritten wird. Sobald also die Differenz zwischen momentaner Temperatur und oberer Grenzwerttemperatur den Wert Null erreicht hat, wird der Ladeschalter geöffnet. Daraufhin beginnt die momentane Temperatur wieder zu sinken, und der Ladeschalter wird wieder geschlossen. Dies wird so lange wiederholt, bis am Ende eines Ladezyklus die Kapazität auf einen Sollwert aufgeladen ist.

Dadurch, dass der Ladeschalter in Abhängigkeit der Differenz zwischen momentaner Temperatur und oberer Grenzwerttemperatur gesteuert wird, wird die anschließbare Kapazität so schnell wie möglich und ohne Überschreiten der thermischen Grenzen aufgeladen.

Der Ladeschalter weist einen Innenwiderstand auf. Die obere Grenzwerttemperatur ist beispielsweise in Abhängigkeit der verwendeten Technologie und der eingesetzten Materialien einstellbar. Bei Implementierung mittels Silizium sind 144 °C ein Beispielwert für die obere Grenzwerttemperatur.

Die Hysterese des Komparators führt zu einem Verzögern des Wiedereinschaltens des Ladeschalters, nachdem die obere Grenzwerttemperatur erreicht wurde. Der Ladeschalter wird also erst wieder geschlossen, wenn die momentane Temperatur auf den Wert der unteren Grenzwerttemperatur gesunken ist.

Mit Hilfe der Hysteresefunktion des Komparators kann der Ladevorgang mit Vorteil so eingestellt werden, dass das Aufladen der Kapazität immer am thermischen Limit der Ladeschaltung und immer mit dem maximal möglichen Temperaturhub erfolgt. Dies führt zu einer Beschleunigung des Ladevorgangs.

Aufgrund der Wiederverwendung von bereits existierenden Bauteilen wie beispielsweise dem Komparator, dem Ladeschalter und der Generierung der Hysterese wird keine zusätzliche Chipfläche benötigt.

Das Istwertsignal repräsentiert die momentane Temperatur, während das obere Grenzwertsignal die obere Grenzwerttemperatur darstellt. Das Steuersignal, welches als Funktion der Differenz zwischen Istwert- und oberem Grenzwertsignal von dem Komparator erzeugt wird, steuert den Ladeschalter.

Die vorliegende Ladeschaltung berücksichtigt einerseits den thermischen Widerstand der Ladeschaltung und andererseits ihr thermisches Tau. Der in der Einheit Kelvin pro Watt angegebene thermische Widerstand sagt aus, welchen Temperaturhub das Zuführen einer Verlustleistung in bestimmter Höhe erzeugt. Der thermische Widerstand liefert also eine Information darüber, welche Verlustleistung eine Schaltung verkraftet. Die Endtemperatur einer Schaltung die aufgrund der Zufuhr einer Verlustleistung in bestimmter Höhe erreicht wird, ergibt sich demzufolge als Summe aus derzeitiger Temperatur der Schaltung und dem Produkt aus dem Wert der zugeführten Verlustleistung und dem thermischen Widerstand.

Das Zeitverhalten wird dabei von dem thermischen Tau bestimmt. Das thermische Tau, welches in Sekunden angegeben wird, ist ein Maß dafür, wie lang die Schaltung braucht, um eine durch die zugeführte Leistung und den thermischen Widerstand bedingte Endtemperatur zu erreichen. Nach drei thermischen Tau werden 95 % der Endtemperatur erreicht, während nach fünf thermischen Tau 99 % der Endtemperatur erreicht sind.

In einer Weiterbildung weist die Ladeschaltung einen Temperatursensor, der mit dem ersten Eingang des Komparators verbunden und thermisch mit der Ladeschaltung gekoppelt ist, auf.

Der Temperatursensor stellt das Istwertsignal bereit.

In einer weiteren Ausführungsform weist der Temperatursensor eine Diode mit einem festgelegten Temperaturkoeffizienten auf.

Eine Möglichkeit der Implementierung des Temperatursensors ist also die Verwendung einer Diode mit einem bekannten Temperaturverhalten. Die an der Diode abfallende Spannung ändert sich in Abhängigkeit der Temperatur.

In einer Weiterbildung ist das Grenzwertsignal als einstellbare Vergleichsspannung zugeführt.

Die Vergleichsspannung wird so eingestellt, dass sie die obere Grenzwerttemperatur repräsentiert.

In einer Weiterbildung ist die Temperatureinheit zur Steuerung des Ladeschalters derart eingerichtet, dass der Ladeschalter geschlossen wird, wenn das Istwertsignal kleiner als das obere Grenzwertsignal ist, dass der Ladeschalter geöffnet wird, wenn das Istwertsignal größer als das obere Grenzwertsignal ist, und dass der Ladeschalter geöffnet bleibt, bis die vom Istwertsignal repräsentierte momentane Temperatur wieder kleiner als die untere Grenzwerttemperatur ist.

In einer weiteren Ausführungsform umfasst der Ladeschalter einen Transistor.

Der Transistor weist einen definierten Innenwiderstand auf, welcher beim Ladevorgang den der Kapazität zugeführten Ladestrom begrenzt.

In einer alternativen Ausführungsform umfasst der Ladeschalter einen idealen Schalter ohne Innenwiderstand und eine mit diesem Schalter gekoppelte Stromquelle.

In einer Ausführungsform weist eine Schaltungsanordnung eine oben beschriebene Ladeschaltung und die Kapazität auf. Die Kapazität ist mit dem zweiten Anschluss der Ladeschaltung und mit einem Bezugspotentialanschluss verbunden.

Die Kapazität ist beispielsweise als Superkapazität realisiert, welche einen hohen Kapazitätswert auf kleiner Fläche realisiert und einen geringen Innenwiderstand aufweist. Dies ist besonders vorteilhaft in der Anwendung als Zwischenspeicher von Ladung für eine Blitzlichtdiode.

In einer Ausführungsform weist ein Verfahren zum Aufladen einer Kapazität folgende Schritte auf:

- Zuführen eines Ladestroms in Abhängigkeit einer Versorgungsspannung über einen Ladeschalter einer Ladeschaltung zu der Kapazität,

- Ermitteln einer momentanen Temperatur der Ladeschaltung,

- Vergleichen der momentanen Temperatur mit einer oberen Grenzwerttemperatur, und

- Ansteuern des Ladeschalters in Abhängigkeit einer Differenz zwischen der momentanen Temperatur und der oberen Grenzwerttemperatur, solange bis die Kapazität am Ende eines Ladezyklus auf einen Sollwert aufgeladen ist, wobei das Ansteuern des Ladeschalters unter Verwendung der oben spezifizierten Temperatureinheit erfolgt, welche direkt mit dem Ladeschalter gekoppelt ist.

Dadurch dass beim Aufladen die obere Grenzwerttemperatur der Ladeschaltung berücksichtigt wird, wird die Kapazität immer am thermischen Limit der Ladeschaltung aufgeladen. Dies ermöglicht mit Vorteil ein sehr schnelles Aufladen im Rahmen der thermischen Gegebenheiten der Ladeschaltung. Das Verfahren passt sich zusätzlich an veränderliche Größen wie beispielsweise die Höhe der Versorgungsspannung, die Höhe der momentanen Temperatur der Ladeschaltung, die thermische Situation in der Umgebung der Ladeschaltung und ähnliches an. Durch das Verfahren ist gewährleistet, dass immer mit der größtmöglichen Geschwindigkeit aufgeladen wird.

Das Verfahren kann ohne digitale Steuerung besonders kostengünstig und platzsparend implementiert werden.

In einer Weiterbildung erfolgt das Ansteuern des Ladeschalters derart, dass der Ladeschalter geschlossen wird, wenn die momentane Temperatur kleiner als die obere Grenzwerttemperatur ist, dass der Ladeschalter geöffnet wird, wenn die momentane Temperatur den Wert der oberen Grenzwerttemperatur erreicht, und dass der Ladeschalter wieder geschlossen wird, wenn die momentane Temperatur kleiner als die untere Grenzwerttemperatur ist.

Diese Verfahrensschritte spiegeln die oben bereits beschriebene Hysterese des eingesetzten Komparators wieder.

In einer weiteren Ausführungsform erfolgt das Ansteuern des Ladeschalters derart, dass der Ladeschalter am Ende eines Ladezyklus geöffnet wird oder geschlossen bleibt.

Am Ende eines Ladezyklus, welches dadurch festgelegt ist, dass die Kapazität auf den Sollwert, welcher beispielsweise an die Höhe der Versorgungsspannung angepasst ist, aufgeladen ist, wird der Ladeschalter geöffnet oder bleibt geschlossen.

Die Erfindung wird nachfolgend mit mehreren Ausführungsbeispielen anhand der Figuren näher erläutert. Funktions- beziehungsweise wirkungsgleiche Bauelemente und Schaltungsteile tragen gleiche Bezugszeichen. Insoweit sich Schaltungsteile in ihrer Funktion entsprechen, wird deren Beschreibung nicht in jeder der Figuren wiederholt. Es zeigen:

Figur 1 ein Beispiel einer Ladeschaltung aus dem Stand der Technik,

Figur 2 einen beispielhaften Verlauf der Verlustleistung aus dem Stand der Technik,

Figur 3 einen beispielhaften Temperaturverlauf aus dem Stand der Technik,

Figur 4 eine erste beispielhafte Ausführungsform einer Ladeschaltung nach dem vorgeschlagenen Prinzip,

Figur 5 eine weitere beispielhafte Ausführungsform einer Ladeschaltung nach dem vorgeschlagenen Prinzip,

Figur 6 ein beispielhaftes Diagramm zur Erläuterung der Hysterese des Komparators,

Figur 7 beispielhafte Diagramme zur Erläuterung des thermischen Taus,

Figur 8 beispielhafte Diagramme zur Erläuterung der Ladeschaltung nach dem vorgeschlagenen Prinzip,

Figur 9 beispielhafte Diagramme bei Aufladen mittels Stromquelle gemäß dem Stand der Technik, und

Figur 10 beispielhafte Diagramme bei Aufladen über einen Widerstand gemäß dem Stand der Technik.

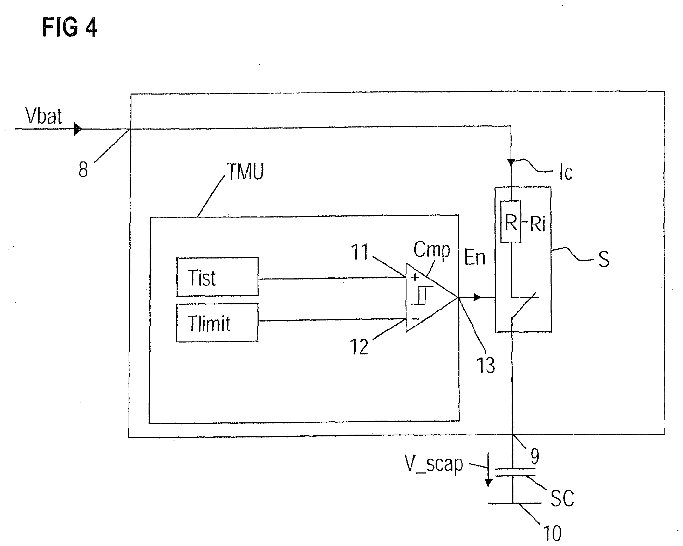

Figur 4 zeigt eine erste beispielhafte Ausführungsform einer Ladeschaltung nach dem vorgeschlagenen Prinzip. Die Ladeschaltung umfasst einen ersten Anschluss 8, dem eine Versorgungsspannung Vbat zugeführt ist, einen zweiten Anschluss 9 zum Verbinden mit einer Kapazität SC, einen Ladeschalter S und eine Temperatureinheit TMU. Der Ladeschalter S ist mit dem ersten und dem zweiten Anschluss 8, 9 gekoppelt und weist einen Innenwiderstand Ri auf. Die Temperatureinheit TMU weist einen Ausgang 13 auf, an dem ein Steuersignal En bereitgestellt ist, welches einem Steuereingang des Ladeschalters S zugeführt ist. Die Temperatureinheit TMU umfasst einen Komparator Cmp. Dem Komparator Cmp ist über seinen ersten Eingang 11 eine momentane Temperatur Tist der Ladeschaltung zugeführt. Über seinen weiteren Eingang 12 ist dem Komparator Cmp eine einstellbare obere Grenzwerttemperatur Tlimit zugeführt. Die anschließbare Kapazität SC ist mit ihrem anderen Anschluss mit einem Bezugspotentialanschluss 10 verbunden. An der Kapazität SC liegt eine Spannung V_scap an. Die Kapazität SC weist beispielsweise eine Superkapazität mit einem bezogen auf die Fläche sehr hohen Kapazitätswert, beispielsweise im mF-Bereich, und einem geringen Innenwiderstand auf.

Zu Beginn eines Ladezyklus wird der Ladeschalter S geschlossen. Über den weiteren Anschluss 9 der Ladeschaltung wird der Kapazität SC ein Ladestrom Ic in Abhängigkeit der Versorgungsspannung Vbat zugeführt. Die Kapazität SC lädt sich auf. Die momentane Temperatur Tist der Ladeschaltung beginnt zu steigen. Sobald die momentane Temperatur Tist den Wert der oberen Grenzwerttemperatur Tlimit erreicht, ändert sich der Wert des Steuersignals En am Ausgang 13 der Temperatureinheit TMU, wodurch der Ladeschalter S geöffnet wird. Die momentane Temperatur Tist sinkt. Hat die momentane Temperatur Tist den Wert einer einstellbaren unteren Grenzwerttemperatur erreicht, so wird der Ladeschalter S wieder geschlossen und die Kapazität SC mit Hilfe des Ladestroms Ic weiter aufgeladen. Dieser Vorgang wird solange wiederholt, bis die Spannung V_scap an der Kapazität SC auf einen Sollwert aufgeladen ist. Dieser Sollwert ist beispielsweise an die Höhe der Versorgungsspannung Vbat angepasst. Bei Erreichen des Sollwerts, also am Ende eines Ladezyklus, bleibt der Ladeschalter S geschlossen.

Die Steuerung des Ladeschalters S und somit der gesamte Ladezyklus erfolgen in Abhängigkeit der Differenz zwischen momentaner Temperatur Tist und der oberen Grenzwerttemperatur Tlimit der Ladeschaltung. Durch diese temperaturabhängige Steuerung wird mit Vorteil die größtmögliche Geschwindigkeit beim Laden der Kapazität SC erzielt, wobei thermische Grenzwerte wie beispielsweise die obere Grenzwerttemperatur Tlimit nicht überschritten werden.

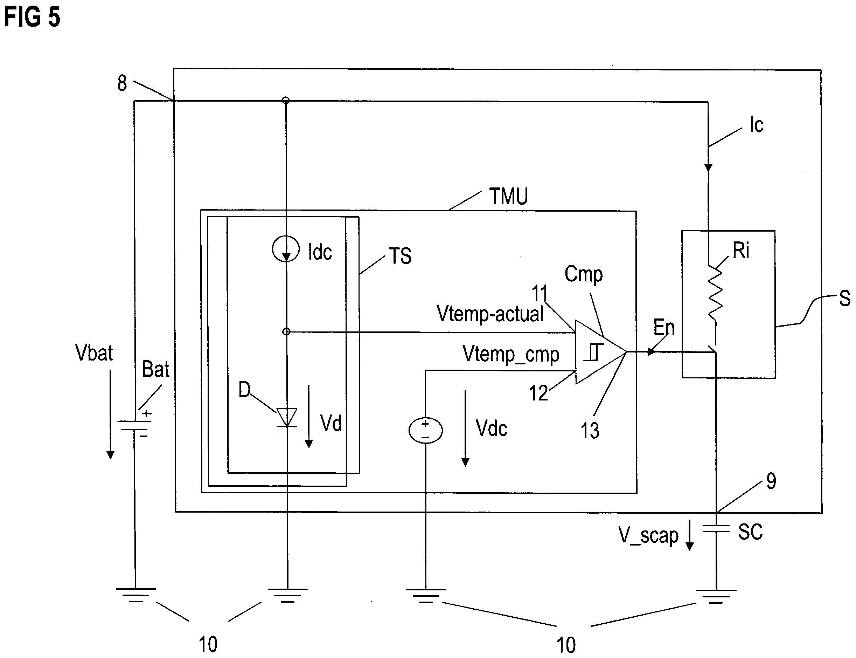

Figur 5 zeigt eine weitere beispielhafte Ausführungsform einer Ladeschaltung nach dem vorgeschlagenen Prinzip. In Ergänzung zur Ausführungsform von Figur 4 ist hier die Temperatureinheit TMU sowie die äußere Beschaltung der Ladeschaltung detaillierter dargestellt. Die Temperatureinheit TMU umfasst zusätzlich zu Figur 4 einen Temperatursensor TS sowie eine Spannungsquelle zum Bereitstellen einer einstellbaren Vergleichsspannung Vdc. Der Temperatursensor TS ist einerseits mit dem ersten Anschluss 8 der Ladeschaltung und andererseits mit dem Bezugspotentialanschluss 10 verbunden. Der Temperatursensor TS weist eine Stromquelle zum Bereitstellen eines Stroms Idc und eine Diode D auf. Die Diode D ist mit der Stromquelle gekoppelt.

Bei konstantem Strom weist die Diode D einen über einen weiten Temperaturbereich konstanten Temperaturkoeffizienten von beispielsweise -2 mV/K auf. Eine an der Diode D abfallende Spannung Vd sinkt demnach um 2mV, wenn sich die Temperatur um 1K erhöhtgemäß folgender Gleichung:

$$\frac{Vd}{dT} \approx -2\frac{mV}{K}$$

Dabei stellen Vd die Spannung Vd an der Diode D, -2 mV/K den Temperaturkoeffizienten der Diode D und dT die Änderung der momentanen Temperatur Tist der Ladeschaltung dar.

Die am Verbindungspunkt zwischen Stromquelle und Diode D des Temperatursensors TS abfallende Spannung Vd wird als Istwertsignal Vtemp_actual dem ersten Eingang 11 des Komparators Cmp zugeführt. Die Vergleichsspannung Vdc wird dem Komparator Cmp an seinem zweiten Eingang 12 als oberes Grenzwertsignal Vtemp_cmp zugeführt.

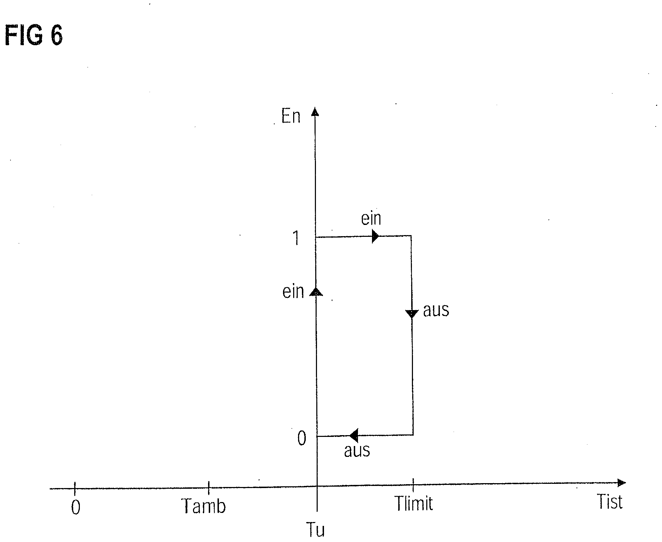

Der Komparator Cmp ist wie dargestellt ein Komparator mit Hysterese, welcher eine erste Schaltschwelle und eine zweite Schaltschwelle aufweist. Die erste Schaltschwelle wird repräsentiert von dem oberen Grenzwertsignal Vtemp_cmp, welches ein Maß für die obere Grenzwerttemperatur Tlimit ist. Die zweite Schaltschwelle des Komparators Cmp wird in Abhängigkeit einer unteren Grenzwerttemperatur eingestellt. Die Hysterese des Komparators Cmp wird in Figur 6 detailliert beschrieben.

Die äußere Beschaltung der Ladeschaltung umfasst eine Energiequelle Bat, die die Versorgungsspannung Vbat bereitstellt und die Kapazität SC.

Die Ladeschaltung bildet zusammen mit der Kapazität SC eine Schaltungsanordnung nach dem vorgeschlagenen Prinzip.

Figur 6 zeigt ein beispielhaftes Diagramm zur Erläuterung der Hysterese des Komparators von Figur 4 und 5. Auf der X-Achse ist die momentane Temperatur Tist dargestellt, während die Y-Achse das Steuersignal En am Ausgang des Komparators repräsentiert. Das Steuersignal En nimmt Werte zwischen Null und Eins an. Auf der X-Achse sind die zwei Schaltschwellen des Komparators eingezeichnet, nämlich die obere Grenzwerttemperatur Tlimit und die untere Grenzwerttemperatur Tu. Des Weiteren ist eine Umgebungstemperatur Tamb eingezeichnet, welche die Temperatur der Umgebung der Ladeschaltung repräsentiert.

Wie bereits beschrieben, wird am Anfang eines Ladezyklus der Ladeschalter S gesteuert von dem Steuersignal En eingeschaltet, wie aus dem aufsteigenden Ast der dargestellten Schaltfunktion zu erkennen. Dadurch wird die Versorgungsspannung Vbat an den zweiten Anschluss 9 der Ladeschaltung geschaltet und die Kapazität SC beginnt sich aufzuladen. Die momentane Temperatur Tist steigt, wie aus dem nach Rechts gerichteten Ast der dargestellten Schaltfunktion zu erkennen. Sobald die momentane Temperatur Tist den Wert der oberen Grenzwerttemperatur Tlimit erreicht, wird der Ladeschalter S durch das Steuersignal En geöffnet beziehungsweise ausgeschaltet gemäß dem fallenden Ast der Schaltfunktion. Folglich fällt die Temperatur Tist gemäß dem nach Links gerichteten Ast der Schaltfunktion. Sobald die momentane Temperatur Tist den Wert der unteren Grenzwerttemperatur Tu erreicht, schaltet das Steuersignal En am Ausgang des Komparators Cmp von Null auf Eins, wodurch der Ladeschalter S geschlossen und die dargestellte Schaltfunktion erneut durchlaufen wird. Hat die Spannung an der Kapazität ihren Sollwert erreicht, wird die Schaltfunktion an beliebiger Stelle verlassen.

Der Wert der oberen Grenzwerttemperatur Tlimit wird in Abhängigkeit des in der Schaltung eingesetzten Halbleitermaterials festgelegt. Der Wert der unteren Grenzwerttemperatur Tu ist frei definierbar in einem Intervall zwischen der Umgebungstemperatur Tamb und der oberen Grenzwerttemperatur Tlimit. Durch Wahl eines Werts der unteren Grenzwerttemperatur Tu, welcher oberhalb der Umgebungstemperatur Tamb liegt, wird sichergestellt, dass die Kapazität SC vollständig aufgeladen wird.

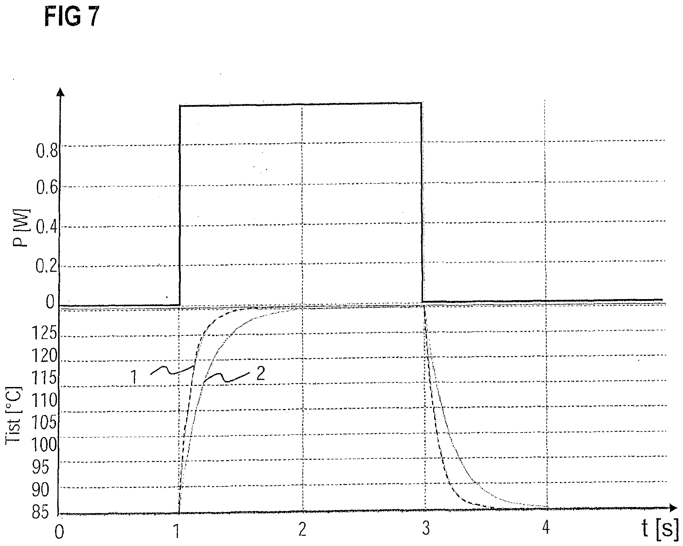

Figur 7 zeigt beispielhafte Diagramme zur Erläuterung des thermischen Taus. Das obere Diagramm zeigt den Verlauf der einer Schaltung zugeführten Leistung P in Einheiten von Watt.

Das untere Diagramm zeigt zwei verschiedene Verläufe der momentanen Temperatur Tist in Grad Celsius.

Dem gezeigten Beispiel liegt eine Ladeschaltung mit einem thermischen Widerstand von 40 K/W zugrunde, der eine Leistung von 1 W für 2 s zugeführt wird. Die Anfangstemperatur beträgt 85 °C. Bei der mit 1 gekennzeichneten Kurve beträgt der Wert des thermischen Taus 100 ms, während bei der mit 2 gekennzeichneten Kurve der Wert des thermischen Taus 200 ms beträgt.

Es ist deutlich zu erkennen, dass bei Kurve 1 95 % des Endwerts von 125 °, also 123 °C, nach 300 ms erreicht werden, während bei Zufuhr der gleichen Leistung dieser Wert in Kurve 2 erst bei 600 ms erreicht wird.

Die Ladeschaltung nach dem vorgeschlagenen Prinzip begrenzt die der aufzuladenden Kapazität zugeführte Leistung sowohl in ihrer Höhe als auch in ihrer zeitlichen Dauer unter Berücksichtigung der thermischen Gegebenheiten der Ladeschaltung und erreicht so vorteilhafterweise jeweils die größtmögliche Aufladegeschwindigkeit.

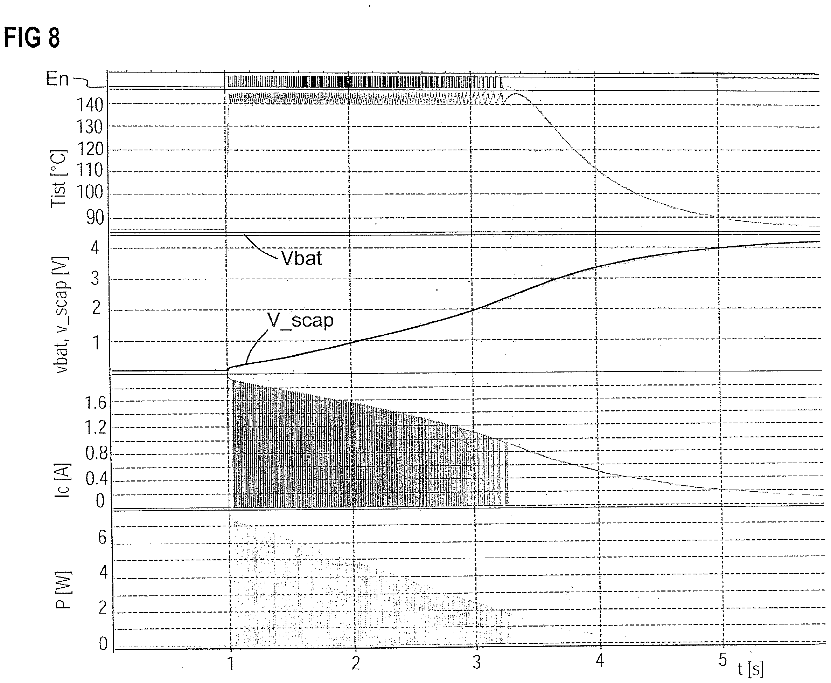

Figur 8 zeigt beispielhafte Diagramme zur Erläuterung der Ladeschaltung nach dem vorgeschlagenen Prinzip. Die einzelnen Diagramme sind im Verlauf zur Zeit t in Sekunden dargestellt. Die erste Zeile zeigt den Verlauf des Steuersignals En. Die zweite Zeile zeigt den Verlauf der momentanen Temperatur Tist in Grad Celsius. Die dritte Zeile zeigt den Verlauf der Versorgungsspannung Vbat sowie der Spannung V_scap an der Kapazität in Volt. Die vierte Zeile zeigt den Verlauf des Ladestroms Ic in Ampere. Die fünfte Zeile zeigt den Verlauf der zugeführten Leistung P in Watt.

Das Ein- und Ausschalten der zugeführten Leistung P beziehungsweise des Ladestroms Ic und die daraus resultierende Schwankung der Temperatur Tist zwischen einer unteren Grenzwerttemperatur von 140 °C und einer oberen Grenzwerttemperatur von 144 °C sind deutlich zu erkennen. Dies entspricht einer Hystere von 4 °C. Die Spannung V_scap an der Kapazität steigt währenddessen kontinuierlich an. Der Ladevorgang ist nach 4,2 s abgeschlossen, wenn die Kapazität auf einen beispielhaften Sollwert von 4V aufgeladen ist.

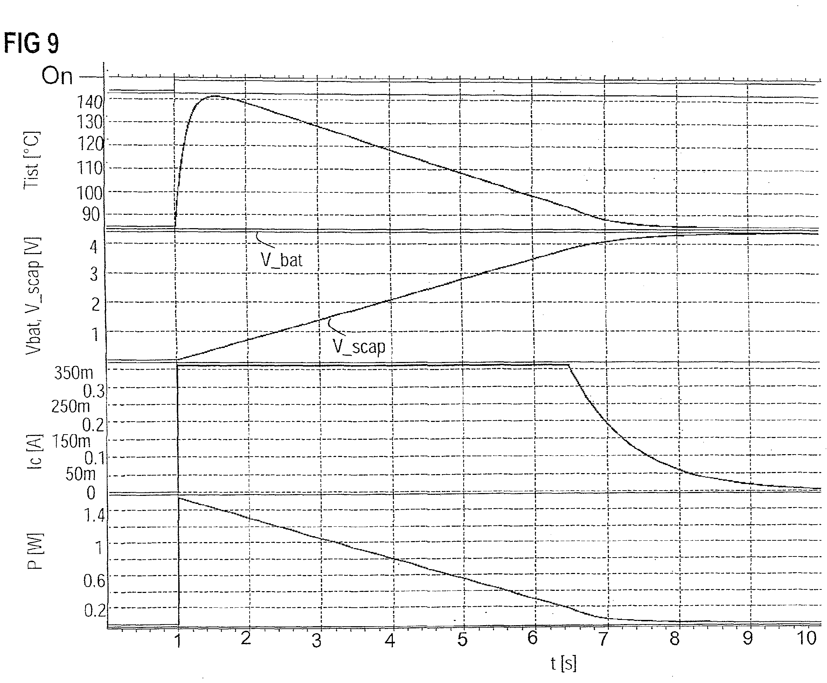

Figur 9 zeigt beispielhafte Diagramme bei Aufladen mittels Stromquelle gemäß dem Stand der Technik. In den jeweiligen Zeilen der Diagramme sind mit Ausnahme der ersten Zeile die gleichen Größen gezeigt wie unter Figur 8, sodass ein Vergleich möglich ist. Die erste Zeile zeigt hier die Aktivierung des Ladevorgangs mittels eines Signals On. Beim konventionellen Laden mit Hilfe einer Stromquelle, wie beispielsweise mit der Schaltung aus Figur 1, wird der Ladestrom Ic kontinuierlich zugeführt. Um die Schaltung thermisch nicht zu zerstören, kann jedoch lediglich ein Ladestrom Ic von in etwa 350 mA zugeführt werden. Somit ist die Spannung V_scap an der Kapazität erst nach der deutlich längeren Zeit von 5,8 s auf den gleichen Wert wie unter Figur 8 aufgeladen.

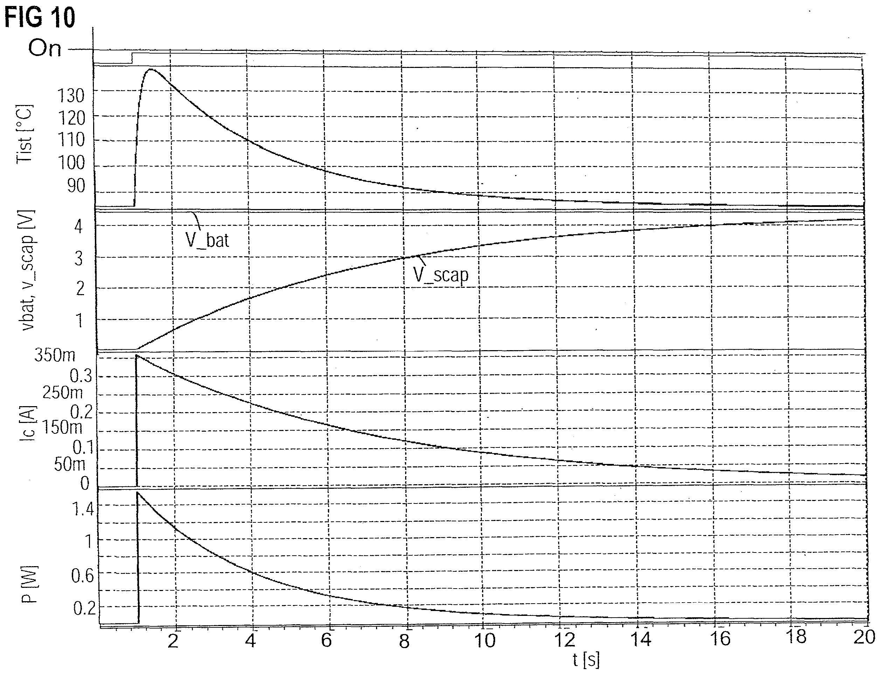

Figur 10 zeigt beispielhafte Diagramme bei Aufladen über einen Widerstand gemäß dem Stand der Technik. Auch hier sind die gleichen Größen dargestellt wie in Figur 9. Ein Widerstand begrenzt hier den maximal zugeführten Ladestrom Ic. Der Wert des Widerstands beträgt beispielsweise 12 Ω. Die Kapazität ist hier erst nach 15 s auf den gewünschten Wert aufgeladen. Eine Verringerung des Widerstandswerts ist nicht möglich, da sonst der größere Ladestrom Ic eine thermische Zerstörung der Ladeschaltung nach sich ziehen würde.

Die Diagramme machen noch einmal deutlich, dass mit der vorgeschlagenen Ladeschaltung und dem vorgeschlagenen Verfahren ein deutlich schnelleres Aufladen der Kapazität ermöglicht wird, ohne der Schaltung thermischen Schaden zuzufügen.

Bezugszeichenliste

| 1, 2 | Kurve |
|------|-------|
| 8 - 11 | Anschluss |
| Cmp | Komparator |

| D | Diode |
|---|---|
| S | Ladeschalter |
| Ri | Innenwiderstand |
| Tist, Tlimit | Temperatur |
| Tu, T | Temperatur |
| V_scap, Vbat | Spannung |
| Vd, Vcmp | Spannung |
| Vdc, V9 | Spannung |
| En | Steuersignal |
| TS | Temperatursensor |
| TMU | Temperatureinheit |
| Ic | Ladestrom |
| C, SC | Kapazität |
| Vtemp_cmp; Vtemp_actual | Signal |
| Bat | Energiequelle |
| Idc | Strom |
| Iq | Stromquelle |
| On | Signal |

## Patentansprüche

**1.** Ladeschaltung für eine Kapazität, aufweisend

- einen ersten Anschluss (8) zum Zuführen einer Versorgungsspannung (Vbat),
- einen zweiten Anschluss (9),
- einen Ladeschalter (S), der mit dem ersten und mit dem zweiten Anschluss (8, 9) gekoppelt ist, und
- eine Kapazität (SC), die mit dem zweiten Anschluss (9) der Ladeschaltung und einem Bezugspotentialanschluss (10) verbunden ist, wobei die Kapazität (SC) zum Betrieb eines Blitzlichts eingerichtet ist,

**dadurch gekennzeichnet, dass** die Ladeschaltung folgendes umfasst:

- eine Temperatureinheit (TMU) mit einem Ausgang (13), der mit einem Steuereingang des Ladeschalters (S) direkt gekoppelt ist, wobei die Temperatureinheit (TMU) zur Steuerung des Ladeschalters (S) in Abhängigkeit einer Differenz zwischen einer momentanen Temperatur (Tist) der Ladeschaltung und einer einstellbaren oberen Grenzwerttemperatur (Tlimit) der Ladeschaltung eingerichtet ist,

wobei die Temperatureinheit (TMU) einen Komparator (Cmp) mit Hysterese umfasst und wobei der Komparator (Cmp) eine erste Schaltschwelle in Abhängigkeit der oberen Grenzwerttemperatur (Tlimit) und eine zweite Schaltschwelle in Abhängigkeit einer einstellbaren unteren Grenzwerttemperatur (Tu) aufweist, und wobei der Komparator (Cmp)

- einen ersten Eingang (11), dem ein Istwertsignal (Vtemp_actual) in Abhängigkeit der momentanen Temperatur (Tist) zugeführt ist,
- einen weiteren Eingang (12), dem ein Grenzwertsignal (Vtemp_cmp) in Abhängigkeit der oberen Grenzwerttemperatur (Tlimit) zugeführt ist, und
- einen Ausgang (13), an dem ein Steuersignal (En) als Funktion der Differenz zwischen Istwertsignal (Vtemp_actual) und Grenzwertsignal (Vtemp_cmp) bereitgestellt ist,

aufweist und wobei der Ausgang (13) des Komparators (Cmp) den Ausgang (13) der Temperatureinheit (TMU) bildet.

**2.** Ladeschaltung nach Anspruch 1,
weiter aufweisend einen Temperatursensor (TS), der mit dem ersten Eingang (11) des Komparators (Cmp) verbunden und thermisch mit der Ladeschaltung gekoppelt ist.

**3.** Ladeschaltung nach Anspruch 2,
wobei der Temperatursensor (TS) eine Diode (D) mit einem festgelegten Temperaturkoeffizienten aufweist.

**4.** Ladeschaltung nach einem der Ansprüche 1 bis 3,
wobei das Grenzwertsignal (Vtemp_cmp) als einstellbare Vergleichsspannung (Vdc) zugeführt ist.

**5.** Ladeschaltung nach einem der Ansprüche 1 bis 4,
wobei die Temperatureinheit (TMU) zur Steuerung des Ladeschalters (S) derart eingerichtet ist, dass der Ladeschalter (S) geschlossen wird, wenn das Istwertsignal (Vtemp_actual) kleiner als das obere Grenzwertsignal (Vtemp_cmp) ist, und dass der Ladeschalter (S) geöffnet wird, wenn das Istwertsignal (Vtemp_actual) größer als das obere Grenzwertsignal (Vtemp_cmp) ist, und dass der Ladeschalter (S) geöffnet bleibt, bis die vom Istwertsignal (Vtemp_actual) repräsentierte momentane Temperatur (Tist) wieder kleiner als die untere Grenzwerttemperatur (Tu) ist.

**6.** Ladeschaltung nach einem der Ansprüche 1 bis 5, wobei der Ladeschalter (S) einen Transistor umfasst.

**7.** Verfahren zum Aufladen einer Kapazität, die zum Betrieb eines Blitzlichts eingerichtet ist, das Verfahren aufweisend folgende Schritte:

- Zuführen eines Ladestroms (Ic) in Abhängigkeit einer Versorgungsspannung (Vbat) über einen Ladeschalter (S) einer Ladeschaltung zu der Kapazität (SC),

wobei das Verfahren **gekennzeichnet ist durch** die Schritte:

- Ermitteln einer momentanen Temperatur (Tist) der Ladeschaltung,
- Vergleichen der momentanen Temperatur (Tist) mit einer oberen Grenzwerttemperatur (Tlimit), und
- Ansteuern des Ladeschalters (S) in Abhängigkeit einer Differenz zwischen der momentanen Temperatur (Tist) und der oberen Grenzwerttemperatur (Tlimit), solange bis die Kapazität (SC) am Ende eines Ladezyklus auf einen Sollwert aufgeladen ist,

wobei das Ansteuern des Ladeschalters (S) unter Verwendung einer Temperatureinheit (TMU) erfolgt, welche direkt mit dem Ladeschalter (S) gekoppelt ist,
wobei die Temperatureinheit (TMU) einen Komparator (Cmp) mit Hysterese umfasst und wobei der Komparator (Cmp) eine erste Schaltschwelle in Abhängigkeit der oberen Grenzwerttemperatur (Tlimit) und eine zweite Schaltschwelle in Abhängigkeit einer einstellbaren unteren Grenzwerttemperatur (Tu) aufweist, und
wobei der Komparator (Cmp)

- einen ersten Eingang (11), dem ein Istwertsignal (Vtemp_actual) in Abhängigkeit der momentanen Temperatur (Tist) zugeführt wird,
- einen weiteren Eingang (12), dem ein Grenzwertsignal (Vtemp_cmp) in Abhängigkeit der oberen Grenzwerttemperatur (Tlimit) zugeführt wird, und
- einen Ausgang (13), an dem ein Steuersignal (En) als Funktion der Differenz zwischen Istwertsignal (Vtemp_actual) und Grenzwertsignal (Vtemp_cmp) bereitgestellt wird,

aufweist und wobei der Ausgang (13) des Komparators (Cmp) den Ausgang (13) der Temperatureinheit (TMU) bildet.

**8.** Verfahren nach Anspruch 7,
wobei das Ansteuern des Ladeschalters (S) so erfolgt, dass der Ladeschalter (S)

- geschlossen wird, wenn die momentane Temperatur (Tist) kleiner als die obere Grenzwerttemperatur (Tlimit) ist,
- geöffnet wird, wenn die momentane Temperatur (Tist) den Wert der oberen Grenzwerttemperatur (Tlimit) erreicht, und
- wieder geschlossen wird, wenn die momentane Temperatur (Tist) kleiner als eine untere Grenzwerttemperatur (Tu) ist.

**Claims**

**1.** A charging circuit for a capacitance, comprising

- a first connection (8) for feeding a supply voltage (Vbat),
- a second connection (9),
- a charging switch (S) coupled to the first and second connections (8, 9), and
- a capacitance (SC) connected to the second connection (9) of the charging circuit and to a reference potential connection (10), the capacitance (SC) being set up to operate a flashlight,

**characterized in that** the charging circuit comprises the following:

- a temperature unit (TMU) with an output (13) which is directly coupled to a control input of the charging switch (S), with the temperature unit(TMU) being set up to control the charging switch (S) as a function of a difference between an instantaneous temperature (Tist) of the charging circuit and an adjustable upper limit value temperature (Tlimit) of the charging circuit,

wherein the temperature unit (TMU) comprises a comparator (Cmp) with hysteresis, and the comparator (Cmp) comprising a first switching threshold as a function of the upper limit value temperature (Tlimit), and a second switching threshold as a function of an adjustable lower limit value Temperature (Tu), and wherein the comparator (Cmp) comprises

- a first input (11) to which an actual value signal (Vtemp_actual) is fed as a function of the instantaneous temperature (Tist),
- a further input (12) to which a limit value signal (Vtemp_cmp) is fed as a function of the upper limit value temperature (Tlimit), and
- an output (13) at which a control signal (En) is provided as a function of the difference between the actual value signal (Vtemp_actual) and the limit value signal (Vtemp_cmp),

and wherein the output (13) of the comparator (Cmp) constitutes the output (13) of the temperature unit (TMU).

2. The charging circuit according to claim 1, furthermore comprising a temperature sensor (TS) connected to the first input (11) of the comparator (Cmp) and thermally coupled to the charging circuit.

3. The charging circuit according to claim 2, wherein the temperature sensor (TS) comprises a diode (D) having a defined temperature coefficient.

4. The charging circuit according to any one of claims 1 to 3, wherein the limit value signal (Vtemp_cmp) is fed as an adjustable comparative voltage (Vdc).

5. The charging circuit according to any one of claims 1 to 4, wherein the temperature unit (TMU) for controlling the charging switch (S) is set up such that the charging switch (S) will be closed when the actual value signal (Vtemp_actual) is smaller than the upper limit value signal (Vtemp_cmp), and the charging switch (S) will be opened when the actual value signal (Vtemp_actual) is greater than the upper limit value signal (Vtemp_cmp), and such that the charging switch (S) will remain open until the instantaneous temperature (Tist) represented by the actual value signal (Vtemp_actual) is again lower than the lower limit value temperature (Tu).

6. The charging circuit according to any one of claims 1 to 5, wherein the charging switch (S) comprises a transistor.

7. A method for charging a capacitance set up to operate a flashlight, the method comprising the following steps of:

- feeding a charging current (Ic) as a function of a supply voltage (Vbat) via a charging switch (S) of a charging circuit to the capacitance (SC),

the method being **characterized by** the steps of:

- determining an instantaneous temperature (Tist) of the charging circuit,
- comparing the instantaneous temperature (Tist) to an upper limit value temperature (Tlimit), and
- driving the charging switch (S) as a function of a difference between the instantaneous temperature (Tist) and the upper limit value temperature (Tlimit) until the capacitance (SC) is charged to a nominal value at the end of a charging cycle,

wherein the driving of the charging switch (S) is performed by using a temperature unit (TMU) which is directly coupled to the charging switch (S),
wherein the temperature unit (TMU) comprises a comparator (Cmp) with hysteresis, and the comparator (Cmp) comprising a first switching threshold as a function of the upper limit value temperature (Tlimit), and a second switching threshold as a function of an adjustable lower limit value Temperature (Tu), and
wherein the comparator (Cmp) comprises

- a first input (11) to which an actual value signal (Vtemp_actual) is fed as a function of the instantaneous temperature (Tist),
- a further input (12) to which a limit value signal (Vtemp_cmp) is fed as a function of the upper limit value temperature (Tlimit), and
- an output (13) at which a control signal (En) is provided as a function of the difference between the actual value signal (Vtemp_actual) and the limit value signal (Vtemp_cmp),

and wherein the output (13) of the comparator (Cmp) constitutes the output (13) of the temperature unit (TMU).

8. The method according to claim 7,
wherein the driving of the charging switch (S) is performed such that the charging switch (S)

- will be closed when the instantaneous temperature (Tist) is lower than the upper limit value temperature (Tlimit),
- will be opened when the instantaneous temperature (Tist) reaches the value of the upper limit value temperature (Tlimit), and
- will be closed again when the instantaneous temperature (Tist) is lower than a lower limit value temperature (Tu).


## Revendications

1. Circuit de charge pour un condensateur, présentant

- une première connexion (8) servant à amener une tension d'alimentation (Vbat),
- une deuxième connexion (9),
- un commutateur de charge (S) qui est couplé à la première et à la deuxième connexion (8, 9), et
- un condensateur (SC) qui est relié à la deuxième connexion (9) du circuit de charge et à une connexion de potentiel de référence (10), sachant que le condensateur (SC) est configuré pour l'opération d'un flash,

**caractérisé en ce que** le circuit de charge comprend ce qui suit :

- une unité de température (TMU) présentant une sortie (13) qui est directement couplée à une entrée de commande du commutateur de charge (S), sachant que l'unité de température (TMU) est configurée pour la commande du commutateur de charge (S) en fonction d'une différence entre une température instantanée (Tist) du circuit de charge et une température de valeur limite supérieure (Tlimit) réglable du circuit de charge,

sachant que l'unité de température (TMU) comprend un comparateur (Cmp) à hystérésis et sachant que le comparateur (Cmp) présente un premier seuil de commutation en fonction de la température de valeur limite supérieure (Tlimit) et un deuxième seuil de commutation en fonction d'une température de valeur limite inférieure (Tu) réglable, et sachant que le comparateur (Cmp) présente

- une première entrée (11) à laquelle est amené un signal de valeur effective (Vtemp_actual) en fonction de la température instantanée (Tist),
- une entrée supplémentaire (12) à laquelle est amené un signal de valeur limite (Vtemp_cmp) en fonction de la température de valeur limite supérieure (Tlimit), et
- une sortie (13) au niveau de laquelle un signal de commande (En) est mis à disposition comme fonction de la différence entre signal de valeur effective (Vtemp_actual) et signal de valeur limite (Vtemp_cmp),

et sachant que la sortie (13) du comparateur (Cmp) forme la sortie (13) de l'unité de température (TMU).

**2.** Circuit de charge selon la revendication 1,
présentant en outre un capteur de température (TS) qui est relié à la première entrée (11) du comparateur (Cmp)
et couplé thermiquement au circuit de charge.

**3.** Circuit de charge selon la revendication 2,
sachant que le capteur de température (TS) présente une diode (D) ayant un coefficient de température défini.

**4.** Circuit de charge selon l'une des revendications 1 à 3,
sachant que le signal de valeur limite (Vtemp_cmp) est amené comme tension de comparaison (Vdc) réglable.

**5.** Circuit de charge selon l'une des revendications 1 à 4,
sachant que l'unité de température (TMU) est configurée pour la commande du commutateur de charge (S) de telle
façon que le commutateur de charge (S) se ferme lorsque le signal de valeur effective (Vtemp_actual) est plus petit
que le signal de valeur limite supérieur (Vtemp_cmp), et que le commutateur de charge (S) s'ouvre lorsque le signal
de valeur effective (Vtemp_actual) est plus grand que le signal de valeur limite supérieur (Vtemp_cmp), et que le
commutateur de charge (S) reste ouvert jusqu'à ce que la température instantanée (Tist) représentée par le signal
de valeur effective (Vtemp_actual) soit de nouveau plus petit que la température de valeur limite inférieure (Tu).

**6.** Circuit de charge selon l'une des revendications 1 à 5,
sachant que le commutateur de charge (S) comprend un transistor.

**7.** Procédé permettant de charger un condensateur qui est configuré pour l'opération d'un flash, le procédé présentant
les étapes suivantes :

- amenée d'un courant de charge (Ic) en fonction d'une tension d'alimentation (Vbat) via un commutateur de
charge (S) d'un circuit de charge à un condensateur (SC),

sachant que le procédé est **caractérisé par** les étapes de :

- détermination d'une température instantanée (Tist) du circuit de charge,
- comparaison de la température instantanée (Tist) avec une température de valeur limite supérieure (Tlimit), et
- commander le commutateur de charge (S) en fonction d'une différence entre la température instantanée (Tist)
et la température de valeur limite supérieure (Tlimit) jusqu'à ce que le condensateur (SC) soit chargé à une
valeur de consigne à la fin d'un cycle de charge,

sachant que commander le commutateur de charge (S) s'effectue moyennant une unité de température (TMU) qui
est directement couplée au commutateur de charge (S),
sachant que l'unité de température (TMU) comprend un comparateur (Cmp) à hystérésis et sachant que le comparateur (Cmp) présente un premier seuil de commutation en fonction de la température de valeur limite supérieure
(Tlimit) et un deuxième seuil de commutation en fonction d'une température de valeur limite inférieure (Tu) réglable, et
sachant que le comparateur (Cmp) présente

- une première entrée (11) à laquelle est amené un signal de valeur effective (Vtemp_actual) en fonction de la
température instantanée (Tist),
- une entrée supplémentaire (12) à laquelle est amené un signal de valeur limite (Vtemp_cmp) en fonction de
la température de valeur limite supérieure (Tlimit), et
- une sortie (13) au niveau de laquelle un signal de commande (En) est mis à disposition comme fonction de
la différence entre signal de valeur effective (Vtemp_actual) et signal de valeur limite (Vtemp_cmp),

et sachant que la sortie (13) du comparateur (Cmp) forme la sortie (13) de l'unité de température (TMU).

**8.** Procédé selon la revendication 7,
sachant que commander le commutateur de charge (S) s'effectue de telle manière que le commutateur de charge (S)

- se ferme lorsque la température instantanée (Tist) est plus petite que la température de valeur limite supérieure
(Tlimit),
s'ouvre lorsque la température instantanée (Tist) atteint la valeur de la température de valeur limite supérieure
(Tlimit), et

- se referme lorsque la température instantanée (Tist) est plus petite qu'une température de valeur limite inférieure (Tu).

- se referme lorsque la température instantanée (Tist) est plus petite qu'une température de valeur limite inférieure (Tu).

## FIG 1

Vbat

Iq

C

## FIG 2

## FIG 3

## FIG 4

**FIG 5**

# FIG 6

FIG 7

**FIG 8**

FIG 9

FIG 10

**IN DER BESCHREIBUNG AUFGEFÜHRTE DOKUMENTE**

**In der Beschreibung aufgeführte Patentdokumente**

- CN 2643528 Y

- US 20090237142 A1